# EUROPEAN PATENT SPECIFICATION

(11) **EP 3 214 983 B1**
(45) Date of publication and mention of the grant of the patent: **02.01.2019**
(21) Application number: 15808265.1
(22) Date of filing: 05.11.2015
(51) Int. Cl.: A47J 36/02

(54) **COOKING VESSEL FOR INDUCTION HOBS AND A METHOD FOR MAKING THE COOKING VESSEL**
KOCHGEFÄSS FÜR INDUKTIONSHERDE UND VERFAHREN ZUR HERSTELLUNG DES KOCHGEFÄSSES
RÉCIPIENT DE CUISSON POUR PLAQUES À INDUCTION ET PROCÉDÉ DE FABRICATION DUDIT RÉCIPIENT DE CUISSON

(30) Priority: 05.11.2014 IT BO20140612
(43) Date of publication of application: 13.09.2017
(73) Proprietor: Domo S.p.A., 61030 Fraz. Calcinelli - Saltara (Pesaro - Urbino) (IT)
(72) Inventor: MEZZANOTTI, Maurizio, I-61034 Fossombrone (pesaro-urbino) (IT)
(74) Representative: Zermani, Umberto
(86) International application number: PCT/IB2015/058544
(87) International publication number: WO 2016/071858

(56) References cited:
- EP-A1- 2 371 248
- WO-A1-2005/115207
- WO-A1-2009/156783
- US-A- 5 564 590
- US-A- 5 647 271
- US-B1- 6 635 855

## Description

### Technical field

This invention relates to a cooking vessel for induction hobs and a method for making the cooking vessel.

Thus, the invention is applicable in particular in the moulding sector and the industrial design for kitchen objects.

### Background art

Numerous methods are known in the prior art aimed at allowing the production, at limited costs, of cooking vessels designed for use on inductive surfaces.

These methods mainly aim to adapt aluminium cooking vessels, which are relatively inexpensive and simple to machine, with inductive bottoms.

A first prior art solution, the so-called braze welding, comprises welding a magnetic steel plate to the aluminium containment body by using a welding alloy, which has melting point less than that of the aluminium. Due both to the high temperatures and the need to prepare a steel base with a relatively great thickness, this technique is very expensive, therefore becoming uneconomical for the manufacturer.

Moreover, it should be noted that a technique of that type does not allow cooking vessels to made in compliance with CE standards, as the dimensional constraints currently specified at an EU level are more stringent than those which can be obtained by braze welding. This problem is often overcome by the flexibility with which the standard in question is considered, but cases are not rare in which the small differences between the limit values and those which can actually be obtained result in problems for marketing the cooking vessels in certain countries.

A second known method comprises, on the other hand, using only mechanical means, such as, for example, hydraulic presses, for anchoring a ferromagnetic base to the aluminium containment body of the cooking vessel.

This base is in some cases defined by a pierced plate, or by a metal mesh, which are fitted directly in the aluminium base of the containment body to irremovably constrain them.

It should be noted that in order to guarantee the anchoring between the containment body and the disk, the latter is equipped with protuberances which project from the surface of the disk intended to face towards the vessel.

In US 5,564,590 is discloses a cooking vessel and a method for making the cooking vessel. This type of cooking vessel is a stainless cooking vessel in which a base bottom is added, using a pressing device such a friction press or a high frequency heating device, with copper, copper alloy, alluminium bottom plate for improving its heat tranfert rate.

Disadvantageously, in order to make the protuberances on the magnetic steel disk, the disk and its subsequent piercing must be made by moulding; this affects the production costs and the production times which inevitably become longer.

In the event of using a metal mesh, it should be noted that it has often been found difficult to guarantee the non-deformability of the bottom, which is sometimes subjected to distortions.

Moreover, the heat distribution, as the induction is performed starting from the mesh, might also not be completely uniform, with negative affects on the quality of the food.

### Disclosure of the invention

The aim of this invention is therefore to provide a cooking vessel for induction hobs and a method for making the cooking vessel which overcome the above-mentioned drawbacks of the prior art.

More specifically, the aim of this invention is to provide a cooking vessel for induction hobs which is inexpensive to make and has high performance levels.

Another aim of the invention to provide a cooking vessel for induction hobs which is able to comply with current regulations with limited costs.

Moreover, the aim of this invention is also to provide a cooking vessel for induction hobs which is able to allow a quick propagation of the heat.

Again, the aim of this invention is to provide a quick and simple method for making a cooking vessel.

These aims are achieved by a cooking vessel for induction hobs having the features described in one or more of the claims from 1 to 9, as well as by a method for making a cooking vessel as claimed in claims 10 to 13.

More specifically, the cooking vessel comprises a concave containment body provided with at least one bottom wall having a first face, facing the inside of the concavity, and a second face, opposite the first face and facing the outside of the concavity and a metal mesh or pierced disk made of magnetic material, constrained to the second face of the bottom wall and facing the outside of the concavity of the containment body.

According to the invention, the cooking vessel comprises at least a sheet of material with high thermal conductivity or which is ferromagnetic interposed between the second face of the bottom wall and the metal mesh constrained to it, wherein the metal mesh is at least partly embedded.

It should be noted that the sheet is at least partly embedded in the bottom wall of the containment body.

Advantageously, in this way the metal mesh (or the pierced disk) is anchored in an even more stable manner to the containment body, considerably reducing the curvature problem.

Moreover, the interposing of a layer with high thermal conductivity between the metal mesh (where the magnetic field has an effect) and the bottom wall of the containment body allows the heat on the bottom wall to be better distributed, with considerable benefits in terms of uniformity of heating.

If the layer is also ferromagnetic (for example, steel 430), the cooking vessel is also which is able to increase the speed of propagation of the heat.

This cooking vessel is preferably made with the method according to this invention.

This method comprises preparing a metal disk provided with a first face and a second face which are opposite one another, superposing a sheet of material with high thermal conductivity or which is ferromagnetic over the second face of the metal disk, superposing a wire mesh (or a pierced disk) made of magnetic material on the sheet of material with high thermal conductivity and pressing the metal mesh and the sheet onto the metal disk by means of a pressing body to at least partly embed the mesh in the sheet and in the metal disk.

In other words, the cooking vessel is made by drawing, with a single strike of the press in which the pressing body inserts the metal mesh in the sheet and in the bottom wall, thus deforming them.

It should be noted that, preferably, the pressing body is shaped in such a way such as to compress a central portion of the metal disk and curve a peripheral portion.

Advantageously, in this way the cooking vessel is made with a single forming operation, being simple, fast and economical to produce.

### Brief description of drawings

These and further features of the present invention will become more apparent from the non-limiting description which follows of a preferred, non-limiting embodiment of cooking vessel for induction hobs and a method for making cooking vessels for induction hobs, according to this invention, in which:

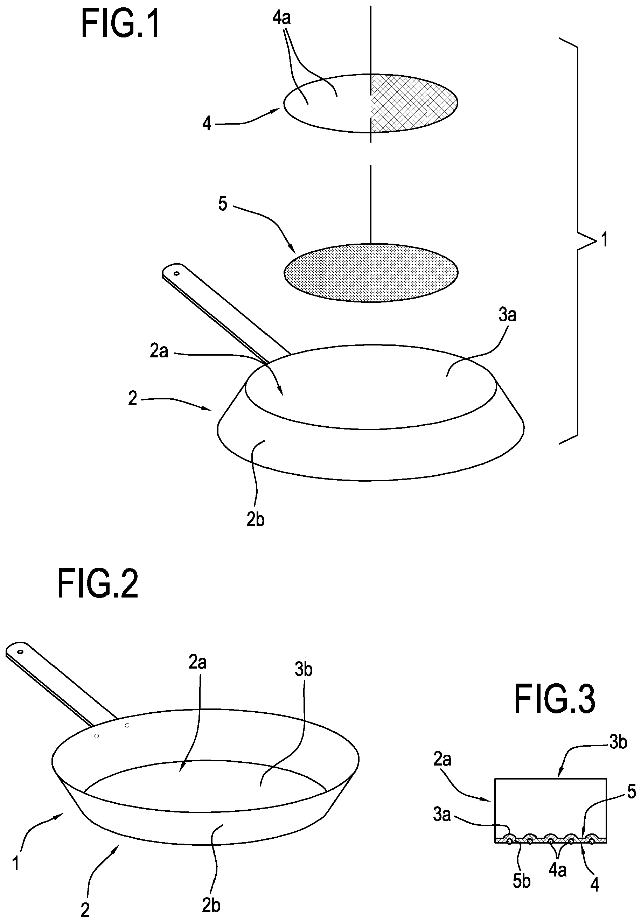

- Figure 1 shows a perspective exploded view from below of a cooking vessel according to this invention;
- Figure 2 shows a perspective view from above of the cooking vessel of Figure 1;
- Figure 3 shows a schematic cross section view of the bottom of the cooking vessel of Figure 2;

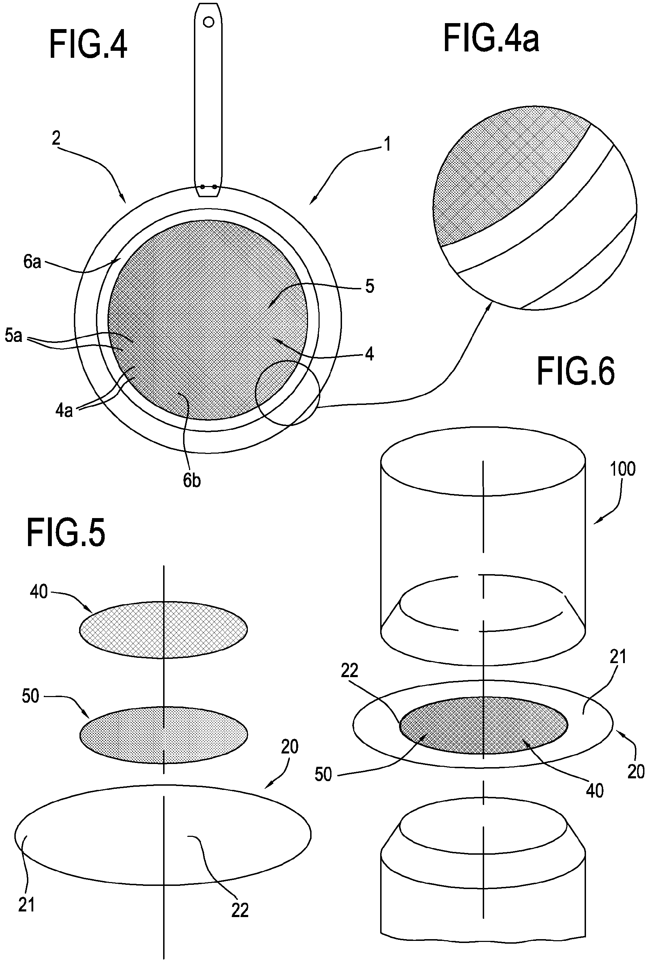

- Figure 4 shows a schematic view from below of the cooking vessel of Figure 1;
- Figure 4a shows a detail of Figure 4;
- Figures 5 and 6 schematically show a sequence of steps of the method for making a cooking vessel according to this invention.

### Detailed description of preferred embodiments of the invention

With reference to the accompanying drawings, the numeral 1 denotes a cooking vessel for induction hobs according to this invention.

As is known, induction type hobs use the principle of electromagnetic induction for heating the vessels used for cooking food.

The cooking vessel 1 according to this invention may therefore be of any shape and size, provided it is equipped with at least one ferromagnetic portion.

For example, the cooking vessel may be:
- a small saucepan;
- a cauldron;
- a saucepan;
- a frying pan;
- a pot;
- a pressure cooker;
- a fish kettle;
- a pan or other vessel.

In the embodiment illustrated, without limiting the scope of the invention, particular reference will be made to a frying pan.

The cooking vessel 1 comprises a concave containment body 2 provided with at least a bottom wall 2a and a lateral wall 2b for containment.

Thus, the containment body 2 has a concavity substantially defined by the orientation of the side wall 2b.

The bottom wall 2a has a first face 3b, facing the inside of the concavity, and a second face 3a, opposite the first 3b and facing the outside of the concavity.

Thus, the first face 3b defines a plane for supporting food to be cooked, whilst the second face 3a is designed to receive the heat from the inductive source.

Preferably, the containment body 2 is made of aluminium or aluminium alloy, and in any case of a non-ferromagnetic metallic material.

In some embodiments, the first face 3b is coated with non-stick material, preferably Teflon or similar material.

According to one aspect of the invention, the cooking vessel 1 also comprises a metal mesh 4 made of magnetic material associated with the second face 3a of the bottom wall 2a of the containment body 2.

Alternatively, in place of the metal mesh 4, a pierced disk (not illustrated) could be provided.

For convenience, reference is made below to the metal mesh 4, however this may include (where compatible) also the embodiment equipped with a pierced disk.

Preferably the metal mesh 4 is constrained to the second face 3a and faces the outside of the concavity of the containment body 2.

Thus, the metal mesh 4 is at least partly visible outside the cooking vessel 1.

Moreover, the cooking vessel comprises at least a sheet 5 of material with high thermal conductivity interposed between the second face 3a of the bottom wall 2a and the metal mesh 4.

Alternatively, or in addition, the sheet 5 is made of ferromagnetic material. The sheet 5 is constrained both to the containment body 2, in particular to the bottom wall 2a, and to the metal mesh 4.

More specifically, the metal mesh 4 is at least partly embedded in the sheet 5.

Even more specifically, the sheet 5 is also at least partly embedded in the bottom wall 2a.

Preferably, therefore, the metal mesh 4 is embedded both in the sheet 5 and in the bottom wall 2a.

It should be noted that the term 'embedded' used herein means the metal mesh 4 is at least partly inserted in the sheet 5.

In other words, the sheet 5 has a plurality of grooves, each shaped to match a wire of the metal mesh 4 for housing it.

Thus, the sheet 5 is a ribbed/grooved sheet.

More specifically, the sheet 5 comprises a plurality of visible portions 5a each delimited by a respective ring 4a of the metal mesh 4 and a plurality of retaining portions 5b, shaped to match the rings 4a and in which the rings are at least partly inserted.

Thus, the visible portions 5a are shaped to match (in the plane) the ring 4a and replicate the shape thereof.

Moreover, the grooves define the retaining portions 5b of the sheet 5.

Advantageously, in this way the mesh 4 is anchored stably to the sheet 5 and the embedding in the sheet of the ring 4a means that the distribution of heat from the metal mesh 4 to the sheet 5 is maximised.

In the embodiment illustrated, each visible portion 5a of the sheet 5 is substantially flush with the corresponding ring 4a of the metal mesh 4.

In other words, the metal mesh 4 and the visible portions 5a of the sheet 5 define a supporting surface for the cooking vessel.

Preferably, the metal mesh 4 is an expanded metal mesh.

In other words, the metal mesh 4 has a plurality of wires having an elongate cross-section and having and orientation.

Advantageously, in this way the anchoring effect of the mesh to the sheet 5 is increased.

Preferably, the bottom wall 2a of the containment body 2, and in particular the second face 3a, has a plurality of grooves corresponding to the grooves of the sheet 5 in such a way as to house them.

Advantageously, this guarantees the non-deformability of the bottom of the containment body 2 and at the same time the heat distribution is maximised.

It should be noted that the bottom wall 2a of the containment body 2 has a peripheral portion 6a substantially annular and a central portion 6b substantially circular to which both the sheet 5 and the metal mesh 4 are anchored.

The peripheral portion 6a is substantially flush with the visible portions 5a of the sheet 5 and the rings 4a of the metal mesh 4.

This allows the anchoring and the fixing of the sheet 5 and the metal mesh 4 to the containment body to be increased, thus increasing the quality of the cooking vessel 1 and making it more reliable.

Preferably, the sheet 5 is made of a material having a thermal conductivity greater than the material with which the containment body 2 is made.

In the preferred embodiment, the sheet 5 is made of copper. Alternatively, the sheet 5 could be made from silver, brass and gold.

Alternatively, in the embodiment with the sheet 5 made of ferromagnetic material, it might be made of steel, preferably AISI 430.

From the dimensional point of view, in order to be easily deformable and adaptable to the rings 4a of the metal mesh 4, the sheet 5 has a thickness less than 1 mm, preferably less than 0.5 mm, more preferably approximately 0.1 mm.

Similarly, the metal mesh 4 preferably has thickness less than 1 mm, more preferably between 0.2 and 0.6 mm, in the preferred embodiment approximately 0.4 mm.

The thicknesses facilitate the method for making the coking vessel, also according to this invention.

The method is substantially a moulding/forming method and comprises firstly the positioning of the various layers of superposed material.

More precisely, the method comprises preparing a metal disk 20 provided with a first face and a second face which are opposite to one another. This disk 20 defines, in the cooking vessel, the containment body 2.

Superposing a sheet 50 of material with high thermal conductivity on the disk 20. More specifically, the sheet 50 is superposed on the second face of the metal disk 20.

It should be noted that the sheet 50 corresponds to the sheet 5 of the cooking vessel 1 before it is deformed and the grooves are made.

Preferably, the sheet 50 has its own central axis and is positioned on the disk in such a way that the central axis corresponds to a centre of the metal disk 20.

A metal mesh 40 made of ferromagnetic material is also provided, which is superposed on the sheet 50 of material with high thermal conductivity.

The mesh 40 is an expanded metal mesh, wherein each wire of the rings is inclined relative to a mid-plane of the metal mesh 40.

In other words, each wire has an inclined section relative to the plane of the sheet 5 in order to facilitate the penetration and anchoring.

In the preferred embodiment, the metal mesh 40 is made of magnetic steel.

The mesh 40 preferably has a thickness of between 0.2 mm and 1 mm, preferably approximately 0.4 mm.

The rings of the mesh 40 define a series of holes having dimensions of between 1,000 and 2,500 microns, preferably between 1,200 and 1,900 microns.

Moreover, the mesh 40 has a weight of between 1 and 4 kg/m2, preferably between 1.8 and 2.5 kg/m2.

According to the invention, the method comprises a step for pressing the metal mesh 40 and the sheet 50 on the metal disk 20.

The pressing step is performed by means of a pressing body 100 in such a way as to embed at least partly the mesh 40 in the sheet 50 and the sheet 50 in the metal disk 20.

It should be noted that during pressing step, the sheet 50 undergoes a plastic deformation such as to create a plurality of grooves for housing the rings of the mesh 40.

Moreover, each ring of the mesh 40 undergoes a flattening. In other words, the pressing body 100 causes a rotation of the cross section of each wire of the mesh in such a way that it is substantially parallel to the mid-plane.

In this regard, it should be noted that the thickness of the metal mesh 40 before the pressing is greater than the thickness of the same metal mesh 4 following the action of the pressing body.

Advantageously, this rotation makes the mesh 4 and the sheet 5 integral in an irremovable fashion.

It should be noted that the metal disk 20 comprises a peripheral annular portion 21 and a central circular portion 22, which are preferably concentric to each other.

Preferably, the pressing step comprises a first and a second sub-step which are carried out simultaneously, wherein the first sub-step comprises pressing the metal mesh 40 and the sheet 50 into the central circular portion 22 of the metal disk 20, in order to at least partly embed them in it, and the second sub-step comprises bending the peripheral annular portion 21 in such a way that the first face 20a of the disk is concave and defines the containment body 2 of the cooking vessel 1.

Advantageously, in this way the cooking vessel 1 is made with a single strike of the press (the pressing step is in effect preferably carried out by drawing).

This allows a considerable reduction in both the production times and costs, with considerable advantages in economic terms for the manufacturer.

In the preferred embodiment, in order to guarantee perfect anchoring of the sheet and of the mesh, the pressing step is carried out in a press with a tonnage of between 2,500 and 3,000 T.

The invention achieves the above mentioned aims and has important advantages.

In effect, the presence of a layer or sheet of material with high thermal conductivity (and/or which is ferromagnetic) between the metal mesh and the bottom of the containment body allows a better distribution of the heat and, therefore, a more uniform cooking of the food.

In effect, the presence of a metal mesh would limit the development of heat on the surface, making it not very uniform; the presence of the layer with high thermal conductivity allows the heat to be diffused more efficiently.

Moreover, it should be noted that the presence of the layer or sheet does not limit the thermal efficiency of the cooking vessel and it also increases the mechanical efficiency.

In effect, the sheet (of copper) allows the curving of the bottom of the vessel to be reduced and increases the hold (that is, the anchoring) of the metal mesh.

It should also be noted that the production of the entire cooking vessel with a single strike of the press allows a significant reduction in the costs and production time, increasing the possibility of generating profit for the manufacturer.

## Claims

1. A cooking vessel for induction hobs, comprising:
- a concave containment body (2) provided with at least a bottom wall (2a) having a first face (3b), facing the inside of said concavity (C), and a second face (3a), opposite to the first face (3b) and facing the outside of said concavity (C);
- a metal mesh (4) or pierced disk made of magnetic material, constrained to said second face (3a) of the bottom wall (2a) and facing the outside of the concavity of the containment body (2); said cooking vessel comprising at least a sheet (5) of material with high thermal conductivity and/or which is ferromagnetic interposed between the second face (3a) of the bottom wall (2a) and the metal mesh (4) or pierced disk constrained to it; the metal mesh (4) or pierced disk being at least partly embedded in the sheet (5);
**characterised in that** the sheet (5) is at least partly embedded in the bottom wall (2a).

2. The cooking vessel according to claim 1, **characterised in that** said sheet (5) comprises a plurality of visible portions (5a) each delimited by a respective ring portion (4a) of the metal mesh (4) or pierced disk and a plurality of retaining portions (5b), shaped to match said ring portions (4a) and in which said ring portions are at least partly inserted.

3. The cooking vessel according to claim 2, **characterised in that** each visible portion (5a) of the sheet (5) is substantially flush with the corresponding ring portion (4a) of the metal mesh (4) or pierced disk.

4. The cooking vessel according to claim 2 or 3, **characterised in that** said bottom wall (2a) of the containment body (3) comprises a substantially annular peripheral portion (6a) and a substantially circular central portion (6b) to which said sheet (5) and said metal mesh (4) or pierced disk are anchored; said peripheral portion (6b) being substantially flush with said visible portions (5a) of the sheet (5) and said ring portions (4a) of the metal mesh (4) or pierced disk.

5. The cooking vessel according to any one of the preceding claims, **characterised in that** said sheet (5) is made of copper.

6. The cooking vessel according to any one of the preceding claims, **characterised in that** the thickness of said sheet (5) is less than 0.5 mm, preferably being approximately 0.1 mm.

7. The cooking vessel according to any one of the preceding claims, **characterised in that** said metal mesh (4) or pierced disk is an expanded metal mesh in order to optimise anchoring in said sheet (5).

8. The cooking vessel according to any one of the preceding claims, **characterised in that** said containment body (2) is at least partly made of aluminium.

9. A method for making a cooking vessel comprising the steps of:
- preparing a metal disk (20) provided with a first face and a second face which are opposite to one another;
- placing a sheet (50) of material with high thermal conductivity or which is ferromagnetic over the second face of said metal disk (20);
- placing a metal mesh (40) or pierced disk made of ferromagnetic material over the sheet (50) of material with high thermal conductivity;
- pressing said metal mesh (40) or pierced disk and said sheet (50) onto said metal disk (20) by means of a pressing body (100) in order to at least partly embed said mesh (40) or pierced disk in said sheet (50) and said sheet (50) in said metal disk (20).

10. The method according to claim 9, **characterised in that** said metal disk (20) comprises a peripheral annular portion (21) and a central circular portion (22); said pressing step comprising a first and a second sub-step which are carried out simultaneously, where:
- the first sub-step comprises pressing the metal mesh (40) or pierced disk and the sheet (50) into the central circular portion (22) of the metal disk (20) in order to at least partly embed them in said metal disk (20);
- the second sub-step comprises bending said peripheral annular portion (21) in such a way that said first face is concave and forms a containment body (2) of the cooking vessel.

11. The method according to claim 9 or 10, **characterised in that** said pressing step is carried out by drawing.

12. The method according to any one of claims 9 to 11, **characterised in that** said pressing step is carried out in a press with a tonnage of between 2,500 and 3,000 T.

## Patentansprüche

1. Kochgefäß für Induktionsherde, umfassend:
- einen konkaven Aufnahmekörper (2), versehen mit mindestens einer Bodenwand (2a), aufweisend eine erste Seitenfläche (3b), die der Innenseite des Hohlraums (C) zugewandt ist, und eine zweite Seitenfläche (3a), die gegenständig zur ersten Seitenfläche (3b) angeordnet ist und der Außenseite des Hohlraums (C) zugewandt ist;
- ein Metallgitter (4) oder eine durchlochte Scheibe, bestehend aus Magnetmaterial, fest verbunden mit der zweiten Seitenfläche (3a) der Bodenwand (2a) und der Außenseite des Hohlraums des Aufnahmekörpers (2) zugewandt,
wobei das Kochgefäß mindestens ein Blech (5) aus einem Material mit hoher Wärmeleitfähigkeit und/oder das ferromagnetisch ist, umfasst, das zwischen der ersten Seitenfläche (3a) der Bodenwand (2a) und dem Metallgitter (4) oder der durchlochten Scheibe, das/die fest daran befestigt ist, eingesetzt ist, wobei das Metallgitter (4) oder die durchlochte Scheibe mindestens teilweise in das Blech (5) eingebettet ist,
**dadurch gekennzeichnet, dass** das Blech (5) mindestens teilweise in die Bodenwand (2a) eingebettet ist.

2. Kochgefäß nach Anspruch 1, **dadurch gekennzeichnet, dass** das Blech (5) eine Vielzahl an sichtbaren Abschnitten (5a) umfasst, die jeweils durch einen jeweiligen Ringabschnitt (4a) des Metallgitters (4) oder der durchlochten Scheibe abgegrenzt sind, und eine Vielzahl an Halteabschnitten (5b), die passend zu den Ringabschnitten (4a) ausgeformt sind und in die die Ringabschnitte mindestens teilweise eingefügt sind.

3. Kochgefäß nach Anspruch 2, **dadurch gekennzeichnet, dass** ein jeder sichtbare Abschnitt (5a) des Blechs (5) im Wesentlichen bündig mit dem entsprechenden Ringabschnitt (4a) des Metallgitters (4) oder der durchlochten Scheibe abschließt.

4. Kochgefäß nach Anspruch 2 oder 3, **dadurch gekennzeichnet, dass** die Bodenwand (2a) des Aufnahmekörpers (3) einen im Wesentlichen ringförmigen umfangsseitigen Abschnitt (6a) und einem im Wesentlichen kreisförmigen mittigen Abschnitt (6b) umfasst, an dem das Blech (5) und das Metallgitter (4) oder die durchlochte Scheibe verankert sind, wobei der umfangsseitige Abschnitt (6b) im Wesentlichen bündig mit den sichtbaren Abschnitten (5a) des Blechs (5) und den Ringabschnitten (4a) des Metallgitters (4) oder der durchlochten Scheibe abschließt.

5. Kochgefäß nach einem der vorhergehenden Ansprüche, **dadurch gekennzeichnet, dass** das Blech (5) aus Kupfer gefertigt ist.

6. Kochgefäß nach einem der vorhergehenden Ansprüche, **dadurch gekennzeichnet, dass** die Dicke des Blechs (5) geringer ist als 0,5 mm und vorzugsweise ungefähr 0,1 mm beträgt.

7. Kochgefäß nach einem der vorhergehenden Ansprüche, **dadurch gekennzeichnet, dass** das Metallgitter (4) oder die durchlochte Scheibe ein gedehntes Metallgitter ist, um die Verankerung im Blech (5) zu optimieren.

8. Kochgefäß nach einem der vorhergehenden Ansprüche, **dadurch gekennzeichnet, dass** der Aufnahmekörper (2) mindestens teilweise aus Aluminium gefertigt ist.

9. Verfahren zur Herstellung eines Kochgefäßes, umfassend die folgenden Schritte:
- Vorbereiten einer Metallscheibe (20), versehen mit einer ersten Seitenfläche und einer zweiten Seitenfläche, die gegenständig zueinander angeordnet sind;
- Platzieren eines Blechs (50) aus einem Material mit hoher Wärmeleitfähigkeit oder das ferromagnetisch ist, auf der zweiten Seitenfläche der Metallscheibe (20);
- Platzieren eines Metallgitters (40) oder einer durchlochten Scheibe aus ferromagnetischem Material über dem Blech (50) aus einem Material mit hoher Wärmeleitfähigkeit;
- Pressen des Metallgitters (40) oder der durchlochten Scheibe und des Blechs (50) auf die Metallscheibe (20) mittels eines Presskörpers (100), um das Gitter (40) oder die durchlochte Scheibe mindestens teilweise im Blech (50) und das Blech (50) in der Metallscheibe (20) einzubetten.

10. Verfahren nach Anspruch 9, **dadurch gekennzeichnet, dass** die Metallscheibe (20) einen umfangsseitigen Ringabschnitt (21) und einen mittigen kreisförmigen Abschnitt (22) umfasst, wobei der Schritt zum Pressen einen ersten und einen zweiten Unterschritt umfasst, die gleichzeitig durchgeführt werden, wobei
- der erste Unterschritt das Pressen des Metallgitters (40) oder der durchlochten Scheibe und des Blechs (50) in den mittigen kreisförmigen Abschnitt (22) der Metallscheibe (20) umfasst, um mindestens teilweise in die Metallscheibe (20) eingebettet zu werden;
- der zweite Unterschritt das Biegen des umfangsseitigen Ringabschnitts (21) umfasst, sodass die erste Seitenfläche konkav ist und einen Aufnahmekörper (2) für das Kochgefäß formt.

11. Verfahren nach Anspruch 9 oder 10, **dadurch gekennzeichnet, dass** der Schritt zum Pressen durch Ziehen ausgeführt wird.

12. Verfahren nach einem der Ansprüche 9 bis 11, **dadurch gekennzeichnet, dass** der Schritt zum Pressen in einer Presse mit einer Presskraft zwischen 2500 und 3000 t ausgeführt wird.

## Revendications

1. Récipient de cuisson pour plaques à induction, comprenant :
- un corps de contenance concave (2) pourvu d'au moins une cloison de fond (2a) comportant un premier côté (3b) orienté vers l'intérieur de ladite concavité (C), et un second côté (3a) opposé au premier côté (3b) et orienté vers l'extérieur de ladite concavité (C) ;
- un treillis métallique (4) ou disque percé composé de matériau magnétique solidaire dudit second côté (3a) de la cloison de fond (2a) et orienté vers l'extérieur de la concavité du corps de contenance (2) ;
ledit récipient de cuisson comprenant au moins une feuille (5) de matériau à haute conductivité thermique et/ou étant ferromagnétique interposée entre le second côté (3a) de la cloison de fond (2a) et le treillis métallique (4) ou disque percé solidaire de celle-ci ; le treillis métallique (4) ou disque percé étant au moins partiellement intégré dans la feuille (5) ;
**caractérisé en ce que** la feuille (5) est au moins en partie intégrée dans la cloison de fond (2a).

2. Récipient de cuisson selon la revendication 1, **caractérisé en ce que** ladite feuille (5) comprend une pluralité de parties visibles (5a), chacune délimitée par une partie annulaire (4a) respective du treillis métallique (4) ou disque percé et une pluralité de parties de retenue (5b) façonnées de manière à correspondre auxdites parties annulaires (4a) et dans lesquelles lesdites parties annulaires sont au moins partiellement insérées.

3. Récipient de cuisson selon la revendication 2, **caractérisé en ce que** chaque partie visible (5a) de la feuille (5) est substantiellement alignée avec la partie annulaire (4a) correspondante du treillis métallique (4) ou disque percé.

4. Récipient de cuisson selon la revendication 2 ou 3, **caractérisé en ce que** ladite cloison de fond (2a) du corps de contenance (3) comprend une partie périphérique (6a) substantiellement annulaire et une partie centrale (6b) substantiellement circulaire auxquelles ladite feuille (5) et ledit treillis métallique (4) ou disque percé sont fixés ; ladite partie périphérique (6b) étant substantiellement alignée auxdites parties visibles (5a) de la feuille (5) et auxdites parties annulaires (4a) du treillis métallique (4) ou disque percé.

5. Récipient de cuisson selon l'une quelconque des revendications précédentes, **caractérisé en ce que** ladite feuille (5) est composée de cuivre.

6. Récipient de cuisson selon l'une quelconque des revendications précédentes, **caractérisé en ce que** l'épaisseur de ladite feuille (5) est inférieure à 0,5 mm, étant de préférence approximativement de 0,1 mm.

7. Récipient de cuisson selon l'une quelconque des revendications précédentes, **caractérisé en ce que** ledit treillis métallique (4) ou disque percé est un treillis métallique expansible afin d'optimiser la fixation dans ladite feuille (5).

8. Récipient de cuisson selon l'une quelconque des revendications précédentes, **caractérisé en ce que** ledit corps de contenance (2) est au moins en partie composé d'aluminium.

9. Procédé de fabrication d'un récipient de cuisson comprenant les étapes de :
- préparer un disque métallique (20) pourvu d'un premier côté et d'un second côté étant opposés l'un à l'autre ;
- placer une feuille (50) de matériau à haute conductivité thermique ou étant ferromagnétique sur le second côté dudit disque métallique (20) ;
- placer un treillis métallique (40) ou disque percé constitué d'un matériau ferromagnétique sur la feuille (50) de matériau à haute conductivité thermique ;
- presser ledit treillis métallique (40) ou disque percé et ladite feuille (50) sur ledit disque métallique (20) au moyen d'un corps de pressage (100) afin d'au moins partiellement intégrer ledit treillis (40) ou disque percé dans ladite feuille (50) et ladite feuille (50) dans ledit disque métallique (20).

10. Procédé selon la revendication 9, **caractérisé en ce que** ledit disque métallique (20) comprend une partie annulaire périphérique (21) et une partie centrale circulaire (22) ; ladite étape de pressage comprenant une première et une seconde sous-étape étant réalisées simultanément, où :
- la première sous-étape comprend le pressage du treillis métallique (40) ou disque percé et de la feuille (50) dans la partie centrale circulaire (22) du disque métallique
(20) afin d'au moins partiellement les intégrer dans ledit disque métallique (20) ;
- la seconde sous-étape comprend le cintrage de ladite partie annulaire périphérique (21) de manière à ce que ledit premier côté soit concave et forme un corps de contenance (2) du récipient de cuisson.

11. Procédé selon la revendication 9 ou 10, **caractérisé en ce que** ladite étape de pressage est réalisée par emboutissage.

12. Procédé selon l'une quelconque des revendications de 9 à 11, **caractérisé en ce que** ladite étape de pressage est réalisée dans une presse dotée d'un tonnage compris entre 2 500 et 3 000 T.
